**Europäisches Patentamt**

**European Patent Office**

**Office européen des brevets**

(19)

(11) Veröffentlichungsnummer : **0 395 912 B1**

(12) **EUROPÄISCHE PATENTSCHRIFT**

(45) Veröffentlichungstag der Patentschrift :
**20.10.93 Patentblatt 93/42**

(21) Anmeldenummer : **90106639.9**

(22) Anmeldetag : **06.04.90**

(51) Int. Cl.⁵ : **C01G 25/02,** C04B 35/48, C04B 35/49

(54) **Sinterfähiges Zirkonoxidpulver und Verfahren zu seiner Herstellung.**

(30) Priorität : **02.05.89 CH 1666/89**

(43) Veröffentlichungstag der Anmeldung :
**07.11.90 Patentblatt 90/45**

(45) Bekanntmachung des Hinweises auf die
Patenterteilung :
**20.10.93 Patentblatt 93/42**

(84) Benannte Vertragsstaaten :
**AT BE CH DE DK FR GB IT LI NL SE**

(56) Entgegenhaltungen :
**EP-A- 0 115 148**
**EP-A- 0 251 432**
**EP-A- 0 354 573**
**FR-A- 2 106 033**
**US-A- 4 886 768**

(73) Patentinhaber : **LONZA AG**
**Gampel/Wallis Geschäftsleitung Basel**
**CH-4002 Basel (CH)**

(72) Erfinder : **Michel, Beatrice**
**Bad. Bahnhofstrasse 23**
**CH- Neuhausen am Rheinfall (CH)**
Erfinder : **Mosimann, Karl**
**Oberberg 2**
**CH- Beringen (Schaffhausen) (CH)**
Erfinder : **Hofmann, Heinrich, Dr.**
**Schlossgasse 26**
**CH- Andelfingen (Zürich) (CH)**
Erfinder : **Overturf, Dale**
**Ausserdorf 273**
**CH- Hallau (Schaffhausen) (CH)**

(74) Vertreter : **von Füner, Alexander, Dr. et al**
**Patentanwälte v. Füner, Ebbinghaus, Finck**
**Mariahilfplatz 2 & 3**
**D-81541 München (DE)**

## Beschreibung

Zur Herstellung von Keramik aus teilstabilisiertem oder tetragonalem Zirkonoxid werden Pulver aus Zirkondioxid mit Stabilisator- oder Legierungszusätzen benötigt, welche diese Zusätze in möglichst homogener Verteilung enthalten. Dies kann beispielsweise dadurch erreicht werden, dass man aus einer wässrigen Zirkonsalzlösung, die ausserdem noch Salze der gewünschten Legierungselemente enthält, die Hydroxide bzw. wässrigen Oxide des Zirkons und der Legierungselemente gemeinsam ausfällt, trocknet und kalziniert. Als Stabilisatorzusatz ist dabei vor allem Yttriumoxid gebräuchlich, das in dem auf die oben beschriebene Weise erhältliche Pulver homogen gelöst ist und üblicherweise in einer Konzentration von ca. 3 mol% vorliegt.

Die aus diesem Pulver hergestellte Keramik weist zwar bei Normaltemperatur gute mechanische Eigenschaften auf, zeigt jedoch bei längerer Einwirkung von Temperaturen zwischen 100 und 400°C einen starken Festigkeitsabfall durch Umwandlung in die monokline Modifikation.

Es ist daher wünschenswert, sinterfähige Zirkonoxidpulver zur Verfügung zu haben, die andere Stabilisator- oder Legierungselemente enthalten, welche diesen unerwünschten Festigkeitsabfall verhindern oder verzögern.

Die Anwendung des Verfahrens der gemeinsamen Ausfällung aus wässrigen Lösungen war bei einigen potentiellen Stabilisator- oder Legierungselementen jedoch bisher nicht möglich, weil die zur Verfügung stehenden Salze dieser Stabillsator- oder Legierungselemente in wässriger Lösung nicht hinreichend stabil waren. Hier ist besonders $TiCl_4$ zu nennen, das mit Wasser sofort hydrolysiert. Diese Schwierigkeit wurde bisher dadurch umgangen, dass anstelle der Halogenide die entsprechenden Alkoxide eingesetzt wurden, die in kontrollierbarer Weise hydrolysiert werden können. Wegen der vergleichsweise hohen Preise dieser Alkoxide ist dieser Weg jedoch mit hohen Kosten verbunden.

Die EP-A-0 115 148 betrifft zirkonoxidkeramik für ein spezielles Einsatzgebiet, nämlich als Isolationsschicht in Sauerstoff-Sensoren ("lambda-Sonden") (siehe Einleitung, S. 1-4).

Die Anwesenheit von $TiO_2$ wird nirgends erwähnt, dagegen muß das Material eine gewisse Menge an fünfwertigen Oxiden ($Nb_2O_5$ oder $Ta_2O_5$) enthalten, um die gewünschten Eigenschaften, insbesondere einen hohen elektrischen Widerstand, aufzuweisen (siehe z.B. Seite 5, Zeilen 7-24, S. 6, Zeile 9 bis S. 8, Zeile 8). Da Titan niemals fünfwertig ist, wird die EP-A-0 115 148 den Fachmann von der Zugabe von Titanoxid abhalten.

In der EP-A-0 279 102 werden u.a. $ZrO_2$-Keramiken mit 5-45 Mol-% $TiO_2$ und 0,25 bis 7 mol-% $Y_2O_3$ beschrieben. Hergestellt werden sie durch gemeinsames Mahlen von $ZrO_2$, $TiO_2$ und Zugabe von yttriumnitrat. Weder $TiO_2$ noch $Y_2O_3$ sind im Kristallgitter des $ZrO_2$-Pulvers eingebaut, eine feste Lösung kann sich allenfalls beim Sintern bilden. Aus Tabelle 1 ist zu entnehmen, daß erst bei $TiO_2$-Gehalten von 25 Mol-% und höher brauchbare Härten und Bruchzähigkeiten erzielt werden. Aus dem erfindungsgemäßen Pulver werden dagegen bereits bei wesentlich niedrigeren $TiO_2$-Gehalten, z.B. 10 Gew.-% (= 14,8 Mol-%) Sinterkörper mit sehr guten mechanischen Eigenschaften erhalten, wobei insbesondere die Bruchzähigkeit höher als die höchsten Werte nach der EP-A-0 279 102 liegt.

Die EP-A-0 279 102 lehrt den Fachmann, mindestens 22 Mol-%, noch besser 25 - 40 Mol-% $TiO_2$ zu verwenden (S. 8, Zeilen 12-18). Die Erzielung noch besserer Eigenschaften bei wesentlich niedrigeren $TiO_2$-Gehalten ist überraschend und bedeutet einen sprunghaften technischen Fortschritt.

Aufgabe der vorliegenden Erfindung war daher, sinterfähige Zirkonoxidpulver mit einer grossen Auswahl an Stabilisator- und Legierungszusätzen, welche möglichst homogen verteilt sein sollten, zur Verfügung zu stellen und ein wirtschaftliches Verfahren zu deren Herstellung ohne Verwendung von Alkoxiden aufzuzeigen.

Die oben gestellte Aufgabe wird wie im folgenden ausgeführt gelöst, nämlich durch ein sinterfähiges Pulver aus Zirkonoxid, gegebenenfalls mit einem oder mehreren Oxid(en) der Gruppe Magnesium, Aluminium, Scandium, Yttrium und Cer, zur Herstellung von Körpern aus überwiegend tetragonaler Zirkonoxidkeramik, dadurch gekennzeichnet, daß das Pulver zu 50 bis 99,9 Gew.-% aus Zirkondioxid besteht, noch ein Oxid des Titans enthält und sämtliche Fremdoxide im Kristallgitter des Zirkondioxids eingebaut sind.

Es ist bevorzugt, daß im Kristallgitter des Zirkondioxids 0,1 bis 15 Gew.-% $TiO_2$ eingebaut sind.

Es ist weiterhin bevorzugt, daß im Kristallgitter des Zirkondioxids 7,5 bis 12,0 Gew.-% $TiO_2$ und 2,5 bis 3,5 Gew.-% $Y_2O_3$ eingebaut sind.

Ferner ist es bevorzugt, daß im Kristallgitter des Zirkondioxids noch zusätzlich 5,0 bis 30,0 Gew.-% $Al_2O_3$ eingebaut sind.

Zum Gegenstand der Erfindung gehört auch die Verwendung des oben spezifizierten sinterfähigen Pulvers zur Herstellung von gesinterten Formkörpern aus tetragonaler oder teilstabilisierter Zirkonoxidkeramik.

Die oben gestellte Aufgabe wird ferner durch ein Verfahren zur Herstellung des sinterfähigen Pulvers auf Zirkondioxidbasis durch Ausfällen, Filtrieren, Waschen, Trocknen und Kalzinieren gelöst, das dadurch gekennzeichnet ist, daß man wenigstens ein Titan(IV)- und/oder Tantal(V)-halogenid mit wenigstens einem mehrwertigen Alkohol aus der Gruppe Ethylenglycol, Diethylenglycol, Triethylenglycol, Tetraethylenglycol, 1,2-Propandiol umsetzt, anschließend gegebenenfalls mit Wasser verdünnt, mit einer wässerigen Zirkonsalzlösung, welche gegebenenfalls ein Salz eines Metalls aus der Gruppe Magnesium, Aluminium, Scandium, Yttrium und Seltene Erden oder ein Gemisch solcher Salze enthält, vermischt und die gelösten Salze mit einer Base als Hydroxide und/oder Oxidhydrate gleichzeitig ausfällt.

Es ist bevorzugt, als Titan(IV)- und/oder Tantal(V)-halogenid $TiCl_4$ und/oder $TaCl_5$ einzusetzen.

Bevorzugt ist ferner, als mehrwertigen Alkohol Ethylenglycol einzusetzen.

Es ist auch bevorzugt, als wässerige Zirkonsalzlösung eine Zirkonoxychloridlösung mit einem Zirkongehalt von 15 bis 30 Gew.-%, berechnet als $ZrO_2$, einzusetzen.

Ferner ist es bevorzugt, als Base Ammoniak einzusetzen.

Es ist weiterhin bevorzugt als Base Natriumhydroxid einzusetzen.

Es ist außerdem bevorzugt, die Fällungsreaktion bei einem pH im Bereich von 6 bis 12,5 durchzuführen.

Es ist auch bevorzugt, die Fällungsreaktion bei einem pH im Bereich von 6 bis 8 durchzuführen.

Schlußendlich ist es bevorzugt, den pH während der Fällungsreaktion innerhalb eines Intervalls von ± 0,3 konstant zu halten.

Die höchstmögliche Homogenität der Verteilung der Komponenten ist aus den Röntgenbeugungsdiagrammen ersichtlich, die keine Beugungslinien erkennen lassen, welche auf zusätzliche kristalline Phasen zurückzuführen wären, sondern eine signifikante, in der Regel lineare vom Gehalt an Legierungsbestandteilen abhängige Verschiebung der Beugungslinien des tetragonalen Zirkondioxids aufweisen. Dies ist ein eindeutiger Beweis für eine Veränderung der Gitterkonstanten durch Mischkristallbildung. In der Tabelle 1 sind die Gitterkonstanten einiger erfindungsgemässer legierter Pulver im Vergleich mit denen des reinen Zirkonoxids aufgeführt.

## Tabelle 1

| | Phase | a[Å] | b[Å] | c[Å] | ß[°] |
|---|---|---|---|---|---|
| $ZrO_2$ *) | m | 5,1477 | 5,2030 | 5,3156 | 99,23 |
| $ZrO_2$ **) | t | 5,12 | (5,12) | 5,25 | (90) |
| $ZrO_2$ + 10 Gew.% $TiO_2$ | m | 5,1193 | 5,1602 | 5,3247 | 98,812 |
| $ZrO_2$ + 10 Gew.% $TiO_2$ + 2,5 Gew.% $Y_2O_3$ | t | 5,0655 | (5,0655) | 5,1948 | (90) |
| $ZrO_2$ + 2 Gew.% CaO | m | 5,1439 | 5,1927 | 5,3149 | 99,28 |
| $ZrO_2$ + 2 Gew.% CaO | t | 5,1219 | (5,1219) | 5,1002 | (90) |

m = monoklin    *) nach ASTM-Kartei Nr. 13-307
t = tetragonal    **) nach ASTM-Kartei Nr. 17-923

Das erfindungsgemässe sinterfähige Pulver wird zweckmässig durch gemeinsame Fällung der Hydroxide und/oder wässrige Oxide des Zirkons und der Legierungs- bzw. Stabilisatorzusätze aus im wesentlichen wässriger Lösung und die an sich bekannte Weiterverarbeitung des so erhaltenen Fällungsproduktes durch Filtrieren, Waschen, anschliessendes Trocknen und Kalzinieren erhalten.

Unter dem Begriff Hydroxide bzw. Oxidhydrate sind hierbei nicht nur die Verbindungen der exakten Zusammensetzung $M^{n+}(OH)_n^-$, sondern alle jene Produkte zu verstehen, welche aus wässrigen Lösungen der entsprechenden Salze bei genügend hohem pH-Wert ausfallen und durch Erhitzen in die Oxide überführbar sind.

Ueberraschend wurde gefunden, dass auch Salze, insbesondere Halogenide, die mit Wasser sofort hydrolysieren, wie $TiCl_4$, $TaCl_5$, $NbCl_5$, $VCl_3$, $VOCl_3$ und $MoCl_5$ in im wesentlichen wässriger Lösung verarbeitet werden können, wenn diese zuvor mit einem mehrwertigen Alkohol aus der Gruppe Ethylenglycol,

EP 0 395 912 B1

Diethylenglycol, Triethylenglycol, Tetraethylenglycol, 1,2-Propandiol, 1,3-Propandiol, Glycerin oder einem Gemisch dieser Alkohole, umgesetzt werden. Bei dieser Umsetzung bildet sich eine klare Lösung in der die obengenannten Salze oder Halogenide vermutlich in komplexer oder kolloidaler Form vorliegen. Die mit steigender Konzentration an gelöstem Metallsalz bzw. -halogenid beobachtete Zunahme der Viskosität, deutet auf einen polymeren Charakter des gebildeten Produktes hin.

Vorzugsweise werden Mischungen mit einem Gehalt von 1 bis 20 Gew.% des Metallhalogenids in dem mehrwertigen Alkohol dadurch hergestellt, dass das Metallhalogenid bei erhöhter Temperatur von beispielsweise 60°C unter starkem Rühren langsam zugegeben wird.

Die so erhaltenen Lösungen der hydrolyse-empfindlichen Metallsalze bzw. -halogenide können anschliessend mit Wasser verdünnt werden, ohne dass Hydrolyseprodukte ausfallen. Das Wasser wird vorzugsweise in einem Verhältnis von ungefähr 1:1 bis 1:3, besonders bevorzugt etwa 1:1, bei einer Temperatur zwischen 0 und 95°C, vorzugsweise bei 20°C, zugesetzt.

Dieser Verdünnungsschritt dient dazu, die Viskosität der Lösungen herabzusetzen und den nachfolgenden Mischvorgang zu erleichtern. Die Verdünnung hat keinen Einfluss auf die Qualität des Produktes, erleichtert jedoch die Handhabung und das exakte Einstellen der gewünschten Zusammensetzung.

Die gegebenenfalls mit Wasser verdünnte Lösung der Metallsalze bzw. -halogenide in dem mehrwertigen Alkohol wird dann mit einer wässrigen Lösung eines Zirkonsalzes vermischt. Diese Zirkonsalzlösung enthält gegebenenfalls weitere nicht hydrolyseempfindliche Metallsalze, welche Vorläufer von Oxiden sind, die als Legierung- oder Stabilisatorzusätze für Zirkondioxid dem Stand der Technik angehören. Dazu gehören beispielsweise $Y_2O_3$, $CeO_2$, $Al_2O_3$, MgO und andere seltene Erden.

Als Zirkonsalz wird vorzugsweise Zirkonoxychlorid eingesetzt, besonders bevorzugt ist eine Lösung von Zirkonoxychlorid mit einem Gehalt von 15 bis 30 Gew.%, berechnet als $ZrO_2$. Die Vermischung erfolgt vorzugsweise bei einer Temperatur von 10 bis 40°C.

Die so schliesslich erhaltene, im wesentlichen wässrige Lösung des Zirkonsalzes mit allen Legierungs- und Stabilisatorzusätzen ist stark sauer mit einem pH-Wert von typischerweise <1.

Durch Zugabe einer basischen Lösung wird bei einem pH im Bereich von vorzugsweise 6 bis 12,5 das Produkt gefällt. Besonders vorteilhaft wird der pH während der Fällung soweit konstant gehalten, dass die Schwankungen nicht mehr als ±0,3 betragen.

Als Base wird vorzugsweise Ammoniak oder Natriumhydroxid verwendet, besonders bevorzugt ist wässrige Ammoniaklösung.

Die saure Lösung des Zirkonsalzes mit allen Legierungs- und Stabilisatorzusätzen wird vorzugsweise unter gleichzeitiger Zugabe von Wasser und der basischen Lösung neutralisiert. So werden die Hydroxide bzw. wässrigen Oxide des Keramikpulvers homogen ausgefällt. Dies geschieht vorzugsweise in einem kontinuierlichen Prozess unter Verwendung eines Dispergierrührwerks.

Die restlichen Schritte der Herstellung des erfindungsgemässen sinterfähigen Pulvers werden auf an sich bekannte Weise durchgeführt.

Eine bevorzugte Verwendung des erfindungsgemässen sinterfähigen Pulvers ist die Herstellung von gesinterten Teilen, die besonders hohe Anforderungen an die mechanischen Eigenschaften stellen, insbesondere solche, die in feuchter oder aggressiver Atmosphäre gebraucht werden.

Typische Beispiele sind Pumpenteile in der Chemie, Motorteile, Biokeramik usw.

Die nachfolgenden Beispiele verdeutlichen die Eigenschaften des erfindungsgemässen sinterfähigen Pulvers und der daraus erhältlichen Sinterprodukte sowie die Durchführung des erfindungsgemässen Verfahrens.

Beispiel 1

Herstellung eines $ZrO_2/TiO_2/Y_2O_3$-Pulvers

Die drei Legierungselemente wurden in gelöster Form entsprechend der gewünschten Zusammensetzung des Endproduktes gemischt. Dabei wurden die einzelnen Komponenten wie folgt in eine wässrige Lösung übergeführt:

a) $ZrOCl_2 \cdot 8 H_2O$ wurde in Wasser gelöst. Die Konzentration der Lösung betrug 15 bis 25 Gew.% an $ZrO_2$.

b) $Y_2O_3$ wurde mit verdünnter (ca. 1:1) Salzsäure in eine Lösung von $YCl_3$ übergeführt. Die Konzentration der Lösung war 10 bis 15 Gew.% an $Y_2O_3$.

c) $TiCl_4$ wurde durch Versetzen mit Ethylenglycol auf eine Konzentration von 8 bis 12 Gew.% an $TiO_2$ verdünnt. Dabei wurde das $TiCl_4$ in eine Form gebracht, die eine weitere Verdünnung mit Wasser ohne zu Hydrolisieren erlaubte.

Das Pulver wurde aus der sauren Reaktionslösung mit Ammoniaklösung (NaOH-Lsg) bei konstantem pH unter intensivem Rühren gefällt.

4

Das gefällte Produkt wurde filtriert und chlorfrei (NaOH-frei) gewaschen und bei 650 bis 750°C kalziniert. Die entstandenen Agglomerate wurden mit Hilfe üblicher Zerkleinerungstechniken desagglomeriert. Das in einer Suspension vorliegende Pulver wurde mittels Sprühtrocknung entwässert.

Dieses gefällte Pulver hatte eine submikrone Kristallitgrösse, eine regelmässige Partikelgrössenverteilung und eine homogene chemische Zusammensetzung.

Kristallitgrösse:                  20 bis 30 nm

Spezifische Oberfläche (BET):      30 bis 40 m2/g

Die Verschiebung der Beugungslinien des monoklinen und/oder tetragonalen Zirkoniumdioxids bewies die Löslichkeit der verschiedenen Elemente im Kristallgitter des Zirkondioxids.

Presskörper dieser Pulver wurden mit einer Aufheizgeschwindigkeit zwischen 3 und 10 k/min, einer Maximaltemperatur zwischen 1200 und 1500°C mit einer Haltezeit zwischen 5 Minuten und 10 Stunden gesintert.

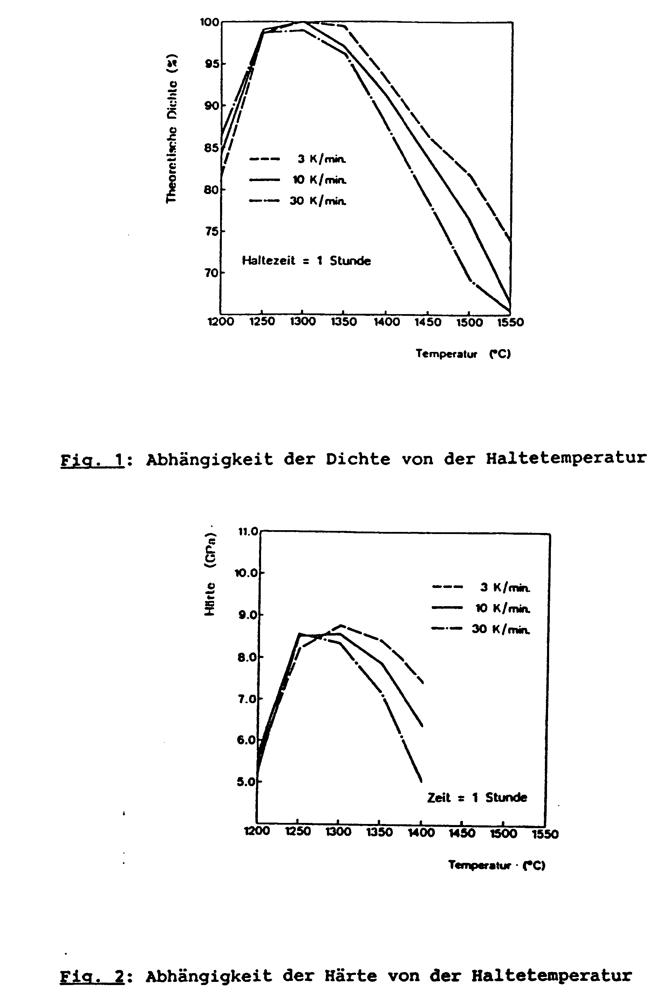

Die besten Ergebnisse wurden mit Aufheizraten von 3 bis 10 K/min und einer Haltezeit von 1 Stunde bei 1250 bis 1350°C erreicht (siehe Fig. 1 bis 3). Die unter diesen Sinterbedingungen erreichten mechanischen Eigenschaften lagen wie folgt:

Härte                  > 8 GPa

$K_{IC}$                  > 8 MPa·√m

Biegefestigkeit      > 600 MPa

Die Struktur war regelmässig und die Korngrösse <300 nm.

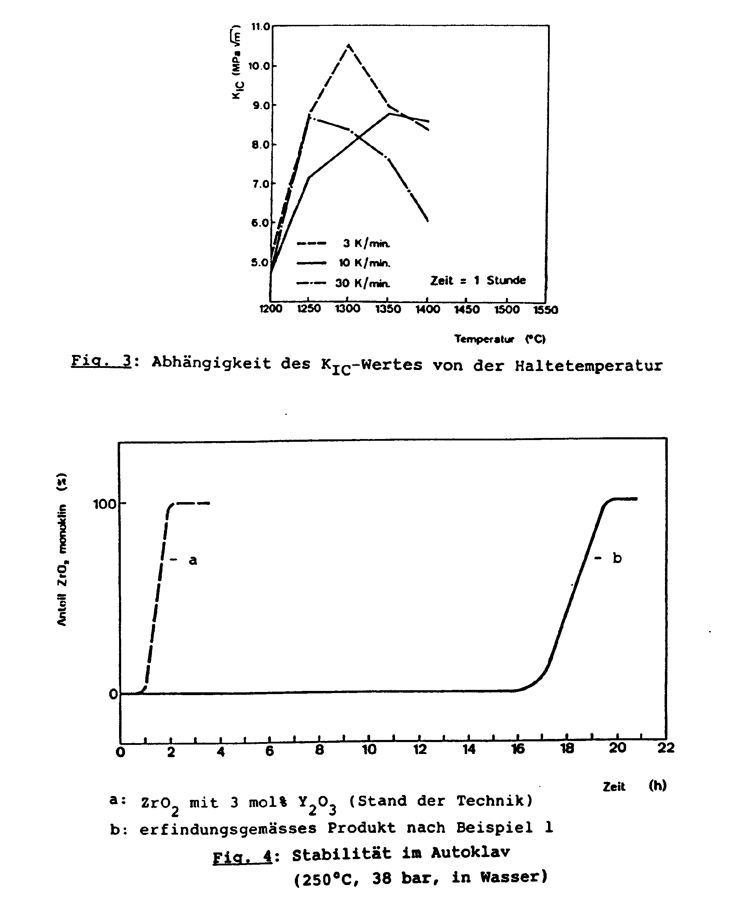

Die Stabilität der Proben war bedeutend besser als die einer 3 mol% Y-TZP (siehe Fig. 4).

Beispiel 2

Herstellung eines $ZrO_2/TiO_2/Y_2O_3/Al_2O_3$-Pulvers

Das Pulver von Beispiel 2 wurde analog wie im Beispiel 1 hergestellt, jedoch wurden noch 20 Gew.% $Al_2O_3$ mitgefällt. Die Kristallitgrösse und die Oberfläche entsprachen Beispiel 1. Die Probe wurde bei 1500°C gesintert, um die maximale Dichte zu erreichen. Die Härte war >12 GPa, $K_{IC}$ >7 MPa √m und die Biegefestigkeit >500 MPa. Die Stabilität in feuchter Atmosphäre war ebenfalls wesentlich besser als bei einer 3 mol% Y-TZP.

## Patentansprüche

1. Sinterfähiges Pulver aus Zirkondioxid, gegebenenfalls mit einem oder mehreren Oxid(en) der Gruppe Magnesium, Aluminium, Scandium, Yttrium und Cer, zur Herstellung von Körpern aus überwiegend tetragonaler Zirkonoxidkeramik, dadurch gekennzeichnet, dass das Pulver zu 50 bis 99,9 Gew.% aus Zirkondioxid besteht, noch ein Oxid des Titans enthält und sämtliche Fremdoxide im Kristallgitter des Zirkondioxide eingebaut sind.

2. Sinterfähiges Pulver nach Patentanspruch 1, dadurch gekennzeichnet, dass im Kristallgitter des Zirkondioxids 0,1 bis 15 Gew.% $TiO_2$ eingebaut ist.

3. Sinterfähiges Pulver nach Patentanspruch 2, dadurch gekennzeichnet, dass im Kristallgitter des Zirkondioxids 7,5 bis 12,0 Gew.% $TiO_2$ und 2,5 bis 3,5 Gew.% $Y_2O_3$ eingebaut sind.

4. Sinterfähiges Pulver nach Patentanspruch 3, dadurch gekennzeichnet, dass im Kristallgitter des Zirkondioxids noch zusätzlich 5,0 bis 30,0 Gew.% $Al_2O_3$ eingebaut ist.

5. Verwendung des sinterfähigen Pulvers nach Patentanspruch 1 zur Herstellung von gesinterten Formkörpern aus tetragonaler oder teilstabilisierter Zirkonoxidkeramik.

6. Verfahren zur Herstellung eines sinterfähigen Pulvers auf Zirkondioxidbasis durch Ausfällen, Filtrieren, Waschen, Trocknen und Kalzinieren, dadurch gekennzeichnet, dass man wenigstens ein Titan (IV)- und-/oder Tantal (V)-halogenid mit wenigstens einem mehrwertigen Alkohol aus der Gruppe Ethylenglycol, Diethylenglycol, Triethylenglycol, Tetraethylenglycol, 1,2-Propandiol umsetzt, anschliessend gegebenenfalls mit Wasser verdünnt, mit einer wässrigen Zirkonsalzlösung, welche gegebenenfalls ein Salz eines Metalls aus der Gruppe Magnesium, Aluminium, Scandium, Yttrium und Seltene Erden oder ein Gemisch solcher Salze enthält, vermischt und die gelösten Salze mit einer Base als Hydroxide und/oder Oxidhydrate gleichzeitig ausfällt.

7. Verfahren nach Patentanspruch 6, dadurch gekennzeichnet, dass als Titan (IV)- und/oder Tantal (V)-halogenid TiCl$_4$ und/oder TaCl$_5$ eingesetzt wird.

8. Verfahren nach Patentanspruch 6 oder 7, dadurch gekennzeichnet, dass als mehrwertiger Alkohol Ethylenglycol eingesetzt wird.

9. Verfahren nach einem oder mehreren der Patentansprüche 6 bis 8, dadurch gekennzeichnet, dass als wässrige Zirkonsalzlösung eine Zirkonoxychloridlösung mit einem Zirkongehalt von 15 bis 30 Gew.%, berechnet als ZrO$_2$, eingesetzt wird.

10. Verfahren nach einem oder mehreren der Patentansprüche 6 bis 9, dadurch gekennzeichnet, dass als Base Ammoniak eingesetzt wird.

11. Verfahren nach einem oder mehreren der Patentansprüche 6 bis 9, dadurch gekennzeichnet, dass als Base Natriumhydroxid eingesetzt wird.

12. Verfahren nach einem oder mehreren der Patentansprüche 6 bis 11, dadurch gekennzeichnet, dass die Fällungsreaktion bei einem pH im Bereich von 6 bis 12,5 durchgeführt wird.

13. Verfahren nach einem oder mehreren der Patentansprüche 6 bis 12, dadurch gekennzeichnet, dass die Fällungsreaktion bei einem pH im Bereich von 6 bis 8 durchgeführt wird.

14. Verfahren nach einem oder mehreren der Patentansprüche 6 bis 13, dadurch gekennzeichnet, dass der pH während der Fällungsreaktion innerhalb eines Intervalls von $\pm$0,3 konstant gehalten wird.

## Claims

1. A sinterable powder of zirconium dioxide, optionally with one or more oxide(s) from the group magnesium, aluminium, scandium, yttrium and cerium, for the preparation of materials made from predominantly tetragonal zirconium oxide ceramic, characterised in that the powder consists of up to 50 to 99.9% by weight of zirconium dioxide, also contains an oxide of titanium and all foreign oxides are incorporated into the crystal lattice of the zirconium dioxide.

2. Sinterable powder according to Patent Claim 1, characterised in that 0.1 to 15% by weight of TiO$_2$ is incorporated into the crystal lattice of the zirconium dioxide.

3. Sinterable powder according to Patent Claim 2, characterised in that 7.5 to 12.0% by weight of TiO$_2$ and 2.5 to 3.5% by weight of Y$_2$O$_3$ are incorporated into the crystal lattice of the zirconium dioxide.

4. Sinterable powder according to Patent Claim 3, characterised in that an additional 5.0 to 30.0% by weight of Al$_2$O$_3$ is incorporated into the crystal lattice of the zirconium dioxide.

5. Use of the sinterable powder according to Patent Claim 1 for the preparation of sintered moulded items made from tetragonal or partially stabilised zirconium oxide ceramic.

6. A process for the preparation of a sinterable powder based on zirconium dioxide by precipitating, filtering, washing, drying and calcining, characterised in that at least a titanium(IV) and/or a tantalum(V) halide is reacted with at least one polyhydric alcohol from the group ethylene glycol, diethylene glycol, triethylene glycol, tetraethylene glycol, 1,2-propanediol, then optionally diluted with water, mixed with an aqueous zirconium salt solution, which optionally contains a salt of a metal from the group magnesium, aluminium, scandium, yttrium and rare earths or a mixture of such salts, and the dissolved salts are simultaneously precipitated as hydroxides and/or hydrated oxides, using a base.

7. A process according to Patent Claim 6, characterised in that TiCl$_4$ and/or TaCl$_5$ is used as a titanium(IV) and/or tantalum(V) halide.

8. A process according to Patent Claim 6 or 7, characterised in that ethylene glycol is used as a polyhydric alcohol.

9. A process according to one or more of Patent Claims 6 to 8, characterised in that a zirconium oxychloride solution with a zirconium content of 15 to 30% by weight, calculated as $ZrO_2$, is used as an aqueous zirconium salt solution.

10. A process according to one or more of Patent Claims 6 to 9, characterised in that ammonia is used as a base.

11. A process according to one or more of Patent Claims 6 to 9, characterised in that sodium hydroxide is used as a base.

12. A process according to one or more of Patent Claims 6 to 11, characterised in that the precipitation reaction is performed at a pH in the range from 6 to 12.5.

13. A process according to one or more of Patent Claims 6 to 12, characterised in that the precipitation reaction is performed at a pH in the range from 6 to 8.

14. A process according to one or more of Patent Claims 6 to 13, characterised in that the pH is kept constant within an interval of ±0.3 during the precipitation reaction.

## Revendications

1. Poudre d'oxyde de zirconium frittable, éventuellement avec un ou plusieurs oxydes du groupe magnésium, aluminium, scandium, yttrium et Cer pour la production de corps de façon prédominante à partir de céramique d'oxyde de zirconium tétragonale, caractérisée en ce que la poudre consiste de 50 jusqu'à 99,9 % en poids de dioxyde de zirconium, contient encore un oxyde de titane et tous les oxydes étrangers sont incorporés dans le réseau cristallin du dioxyde de zirconium.

2. Poudre frittable selon la revendication 1, caractérisée en ce que dans le réseau cristallin du dioxyde de zirconium est incorporé 0,1 à 15 % en poids de $TiO_2$.

3. Poudre frittable selon la revendication 2, caractérisée en ce que dans le réseau cristallin du dioxyde de zirconium sont incorporés 7,5 à 12 % en poids de $TiO_2$ et 2,5 jusqu'à 3,5 % en poids $Y_2O_3$.

4. Poudre frittable selon la revendication 3, caractérisée en ce que dans le réseau cristallin du dioxyde de zirconium sont encore incorporés de façon supplémentaire 5,0 jusqu'à 30,0 % en poids d'$Al_2O_3$.

5. Utilisation de la poudre frittable selon la revendication 1 pour la production de corps moulés frittés à partir de céramique d'oxyde de zirconium tétragonale ou partiellement stabilisée.

6. Procédé pour la production d'une poudre frittable à base de dioxyde de zirconium par précipitation, filtrage, lavage, séchage et calcination, caractérisé en ce que l'on fait réagir au moins un halogénure de titane (IV) et/ou de tantale (V) avec au moins un alcool polyvalent du groupe éthylèneglycol, diéthylèneglycol, triéthylèneglycol, tétraéthylèneglycol, 1,2-propandiol, puis que l'on dilue éventuellement avec de l'eau, mélangé avec une solution de sel de zirconium aqueuse qui contient éventuellement un sel d'un métal du groupe magnésium, aluminium, scandium, yttrium, et les terres rares ou un mélange de ces sels et l'on procède à la précipitation simultanément des sels dissous avec une base comme hydroxyde et/ou hydrate d'oxyde.

7. Procédé selon la revendication 6, caractérisé en ce qu'en tant que halogénure de titane (IV) et/ou tantale (V), on met en oeuvre $TiCl_4$ et/ou $TaCl_5$.

8. Procédé selon la revendication 6 ou 7, caractérisé en ce qu'en tant qu'alcool polyvalent, on met en oeuvre de l'éthylèneglycol.

9. Procédé selon une ou plusieurs des revendications 6 à 8, caractérisé en ce qu'en tant que solution de sel de zirconium aqueuse, on met en oeuvre une solution d'oxychlorure de zirconium avec une teneur en zirconium de 15 à 30 % en poids, calculée en tant que $ZrO_2$.

10. Procédé selon une ou plusieurs des revendications 6 à 9, caractérisé en ce qu'en tant que base, on met en oeuvre de l'ammoniac.

11. Procédé selon une ou plusieurs des revendications 6 à 9, caractérisé en ce qu'en tant que base, on met en oeuvre de l'hydroxyde de sodium.

12. Procédé selon une ou plusieurs des revendications 6 à 11, caractérisé en ce que la réaction de précipitation est effectuée avec un pH dans le domaine de 6 à 12,5.

13. Procédé selon une ou plusieurs des revendications 6 à 12, caractérisé en ce que la réaction de précipitation est effectuée avec un pH dans le domaine de 6 à 8.

14. Procédé selon une ou plusieurs des revendications 6 à 13, caractérisé en ce que le pH pendant la réaction de précipitation est maintenu constant à l'intérieur d'une fourchette de $\pm$ 0,3.

**Fig. 1:** Abhängigkeit der Dichte von der Haltetemperatur

**Fig. 2:** Abhängigkeit der Härte von der Haltetemperatur

**Fig. 3**: Abhängigkeit des $K_{IC}$-Wertes von der Haltetemperatur

a: $ZrO_2$ mit 3 mol% $Y_2O_3$ (Stand der Technik)

b: erfindungsgemässes Produkt nach Beispiel 1

**Fig. 4**: Stabilität im Autoklav

(250°C, 38 bar, in Wasser)